# EUROPEAN PATENT SPECIFICATION

(11) **EP 1 477 092 B1**
(45) Date of publication and mention of the grant of the patent: **17.01.2007**
(21) Application number: 04015583.0
(22) Date of filing: 07.11.2001
(51) Int. Cl.: A47J 31/40, A47J 31/06

(54) **Apparatus for distributing beverages**
Getränkeabgabevorrichtung
Distributeur de boissons

(30) Priority: 07.11.2000 IT BO20000643; 07.11.2000 IT BO20000644; 18.05.2001 IT MO20010100
(43) Date of publication of application: 17.11.2004
(62) Divisional of application: 01982636.1
(73) Proprietor: Smile Coffee S.R.L., 61020 Sassocorvaro (PU) (IT)
(72) Inventor: Chiusoli, Fabio, 40131 Bologna (IT); Baffioni, Domenico, 61020 Mercatale (IT); Cera, Ruggero, 40132 Bologna (IT)
(74) Representative: Luppi, Luigi

(56) References cited:
- WO-A-00/42891

## Description

The present invention relates to an apparatus for preparing beverages according to the preamble of independent claim 1. Such an apparatus is known from WO-A-00/42891.

Machines are known for distributing hot beverages and/or infusions, such as espresso coffees, consisting essentially of a casing containing, at its interior, from the top towards the bottom, a heat exchanging system, for heating the water and for leading said water towards a seat designed for receiving the coffee container.

The lower support of the container seat further provides a filter leading into a beverage collecting chamber provided with an outlet hole for distributing the said beverage.

In the machines currently in use for distributing espresso coffees, different defects may be found, such as the difficulty in correctly inserting and positioning the container into the appropriate seat, but mainly the need of having to manually provide, by care of the user, at the end of each distribution of the coffee, for extracting and unloading the used container.

Quite often, in fact, it may happen that the user forgets proceeding to extract the container that, when left for too much time inside the relative seat, may attach to the walls of the said seat and make difficult, for the next user, to proceed with the relative extraction.

Furthermore, before taking the coffee, it is necessary to extract from the machine the used container, that results a waste of time for the user.

The known machines are generally provided with a recess inside which a cup is laid on a support plane, the cup having a specific size comprised in a certain range of usable sizes, and showing its upper border placed at the outlet opening of the beverage.

In the most cases, a plurality of outlet openings are provided, according to the nature and the typology of the beverages to be distributed, substantially positioned at the same level.

The typology and the nature of the beverages distributed by the machine not only define the number and the structural properties of the outlet openings of such beverages, but also the size of the cups to be faced to the said outlet openings during the distribution phase.

In fact, it is necessary to provide cups with a greater size for beverages containing a greater amount of diluting liquid, such as barley, tea and American coffee, whereas it is convenient to provide cups of smaller size for the espresso coffee and, possibly, the cappuccino.

That implies consequently that the distance between the distributing opening and the cup is greater for the cups having a smaller volume, and is smaller for the cups having grater volume, being the second ones higher than the first ones.

In designing the machine, it is necessary that the distance between the outlet openings of the distributed beverages and the support plane is chosen so as to enable the positioning of cups with greater size.

From here it results that, when a beverage requiring a cup of relatively great height is distributed, the distance between the corresponding outlet opening of the beverage and the inlet section of the cup results relatively small, with a proper and optimal dropping of the beverage towards the cup at the distributing phase, substantially free from projections of splashes and spurts of the beverages beyond the cup in question.

In the case, on the contrary, the distribution was needed of a beverage requiring a cup of height relatively small, the distance between the outlet opening of the beverage and the inlet section of the cup would be relatively high, with high probability that splashes and spurts of the beverage are projected beyond the chosen cup.

This implies a waste of beverage and a great soiling of the recess for housing the cups, that requires maintenance and cleaning interventions particularly frequent. Furthermore machines are known for preparing espresso coffee provided with loaders comprising a drawer hinged to a basic body and suitable for receiving a container of powdery coffee.

The drawer is provided with a cup shaped container at the upper end of which support means is arranged suitable for receiving the container and to support said container during the passage of the water through said container. The container is further provided with a compartment arranged for receiving the espresso coffee so prepared and, at its lower end, with an unloading opening suitable for transferring the said espresso coffee into an underlying cup in order to make the said espresso coffee available to an end user.

Such drawer is moving around a vertical pin, that fixes the said drawer to the said base body, between a loading position wherein the container is arranged externally with respect to the base body in order to enables the end user to remove an already used container and/or to insert a new container and a working operating position wherein the container is inserted inside the base body so as to bring the container up to distributing means of hot water.

With the above mentioned drawer a known blocking device is associated that, after a pressure on said blocking device has been exerted by the end user, enables the drawer to be held in its operating position during the preparation of the espresso coffee, and subsequently, after a further pressure has been exerted on said blocking device by the end user, enables the drawer to be extracted in order to be transferred to its loading position.

The machine further comprises an electric switch, activated by the drawer when the said drawer lies in operating position, that functions as a safety device and is appointed to enable the injection of hot water through the container by the distributing means.

A defect of the machines of this type consists in a remarkable difficulty for cleaning: in particular the drawer, i.e. the machine portion becoming more easily dirty, results hardly suitable for being cleaned, since it is fixed to the base body in permanent manner.

Such drawer, in fact, may be separated from the base body only by providing to dismount it form the machine, such operation resulting uncomfortable and not achievable by users that are not provided with suitable tools for carrying out the dismounting operations.

A further defect of the known machines consists in a certain mounting difficulty since the blocking devices and the electric switches must be assembled on the base body so as to prevent mutual positioning errors that would preclude the possibility of a proper working of the said machine.

A still further defect of the machines of the prior art consists in their low versatility: the drawer with which the said machines are provided, in fact, is arranged to receive only containers having a prefixed diameter, corresponding to a pre-established amount of coffee powder, that prevents the amount of espresso coffee to be prepared from being selected.

A purpose of the present invention is to improve the machines, using containers, for distributing hot beverages and/or infusions.

Another purpose of the present invention is to propose a machine for distributing espresso coffee capable of expelling and unloading the used containers.

It is as well a purpose of the present invention to propose a machine, using containers, for distributing hot beverages and/or infusions, in particular coffee, capable of executing the automatic unloading of the used containers by means of a technical solution of simple ideation and extremely functional and reliable.

Another purpose of the invention is to make more regular the flow of beverages in a manner substantially independent from the size of the cup.

Another purpose is to obtain a machine for preparing espresso coffee provided with a container loader suitable for being easily cleaned.

A still further purpose is to obtain a machine for preparing coffee that may be assembled in easy manner.

A still further purpose of the invention is to obtain a machine for preparing espresso coffee that is particularly versatile, being able to be easily fed with containers of different size ant therefore containing different amounts of coffee.

According to the invention, an apparatus according to independent claim 1 is provided.

Preferred embodiments of the invention are disclosed in the appended dependent claims 2-41.

The invention may be more easily understood with reference to the following description of some versions of the apparatus, illustrated for exemplifying purpose in the attached drawing tables wherein:
Figure 1 is a sketched section taken along a longitudinal vertical plane of a machine according to the present invention;
Figures 2a and 2b are transversal, sketched, partial sections, respectively side section and top section, of the machine of Figure 1 at an operating configuration of the machine when a container is introduced;
Figures from 3a to 3e show, in sketched manner and according to partial, longitudinal, vertical sections, a sequence of operating positions of the machine during the preparation of the coffee and the expulsion and unloading of an exhausted container;
Figure 4 is a sketched top view of the ejecting arm means of an exhausted container highlighting by a continuous line the arm at an intermediate ejecting step of the container, and by dotted line the arm at a starting and ending step;
Figure 5 is a top view, partially sectioned, of a version of the ejecting arm means and respective actuating means;
Figure 6 is a sketched front view of another version of the ejecting arm means actuated by a lever mechanism;
Figure 7 is a section VII-VII of Figure 6;
Figure 8 is a vertical, longitudinal section of a distributing machine provided with a nozzle according to the invention at a distributing step inside a relatively low container;
Figure 9 is an enlarged detail of the distributing nozzle represented in Figure 8;
Figure 10 is a longitudinal section like Figure 8, highlighting the positioning of the distributing nozzle when the beverage is poured into a relatively high container;
Figure 11 is an enlarged detail of the distributing nozzle represented in Figure 10;
Figure 12 is a top view of a machine for preparing beverages according to the invention;
Figure 13 is a side view of the receiving means of the machine of Figure 12 highlighting height positioning means of hinge pin means arranged for connecting the receiving means with a base body of the machine;
Figure 14 is a side view of the receiving means of Figure 12 during a removing step of the receiving means from the base body of the machine;
Figure 15 is a side view of the receiving means of Figure 12 at a subsequent, removing step of the receiving means from the base body of the machine;
Figure 16 is a top view of a variance of a machine for preparing beverages according to the invention;
Figure 17 is a top view of the receiving means of the machine of Figure 16;
Figure 18 is a side view of the base body of the machine of Figure 16;
Figure 19 is a side view of the receiving means of Figure 17;
Figure 20 is a front view of the base body of Figure 16;
Figure 21 is a front view of cup means of a machine according to the invention suitable for receiving a container, for example containing powder of coffee, of great diameter;
Figure 22 is a front view of cup means of a machine according to the invention suitable for receiving a container of small diameter;
Figure 23 is a top, partially exploded view of connecting means arranged for connecting the receiving means of the apparatus of Figure 12 with the base body of the same machine;
Figure 24 is a section taken along a vertical plane of a preferred version of extracting means according to the invention;
Figure 25 is a top view of the extracting means of Figure 24;
Figure 26 is a section taken along a vertical plane of another preferred version of extracting means according to the invention;
Figure 27 is a top view of the extracting means of Figure 26;
Figure 28 is a section taken along a vertical plane of a further preferred version of extracting means according to the invention;
Figure 29 is a top view of the extracting means of Figure 28;
Figure 30 is a section taken along a vertical plane of a still further preferred version of extracting means according to the invention, representing the extracting means at a raised position;
Figure 31 is a section like Figure 30 highlighting the extracting means at a lowered position.

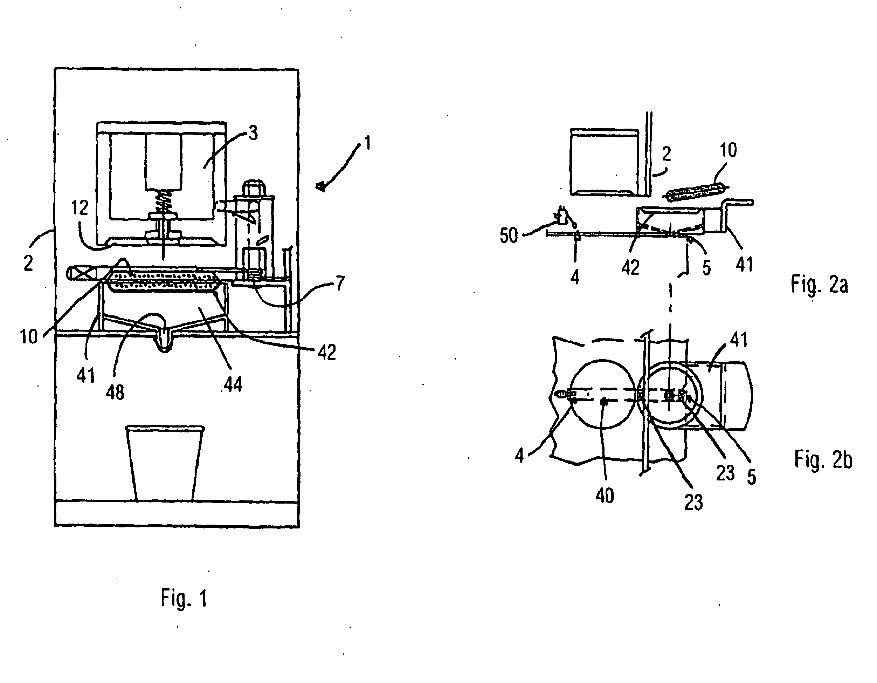

With reference to the Figures 1 to 7, a machine 1 is shown, employing containers, for distributing hot beverages and/or infusions, in particular coffee.

The machine 1 comprises a casing 2, at whose interior there are provided a heat exchanger 3, a drawer 41 provided with a filter support 42 for housing a container 10.

The container 10 consists of two sheets of flexible material, for example paper or tissue, peripherally joined so as to encapsulate the substance with which the infusion is obtained.

The filter support 42 is communicating, downwards, with a collecting chamber 44 that communicates with the exterior by means of an outlet opening 48 for distributing the coffee.

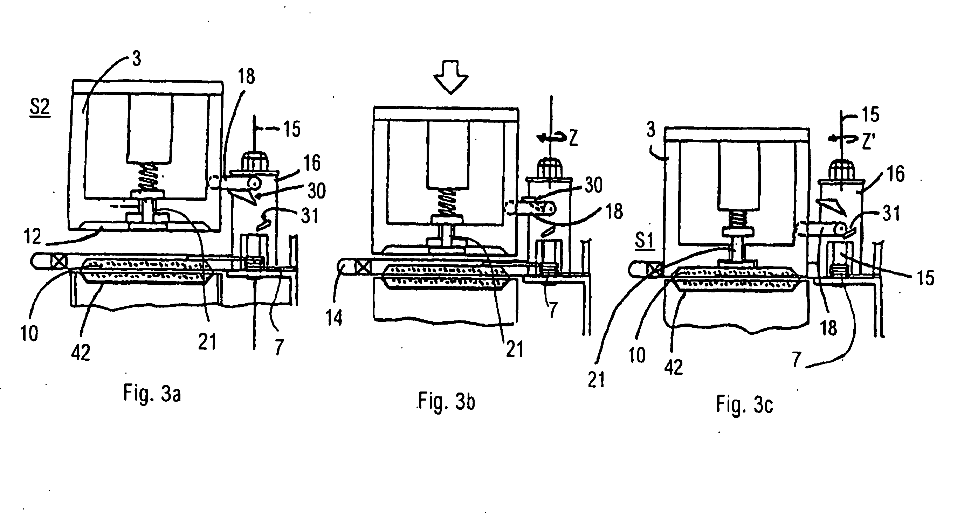

The heat exchanger 3 is vertically movable, for example by means of a reciprocating piston system not shown, between a lower operating position S1 (Figure 3c) and an upper not-operating position S2 (Figure 3a).

The lower operating position S1 corresponds to positioning a lower face 12 of the heat exchanger S in contact with the upper portion of a container 10 arranged on the filter support 42. In this operating configuration S1 the water warmed by the heat exchanger 3 may flow from valve means 21 toward the container 10 by crossing the container 10 and expanding itself through said container 10 in order to give place to the coffee beverage. At the upper not-operating position S2, instead, the heat exchanger 3 is at a remote position with respect to the filter support 42 so as to enable that an exhausted container 10 may be unloaded.

The heat exchanger 3 is provided with an external control member 18, consisting of a protrusion having an end fixed with said heat exchanger 3 and further free end shaped so as to intercept main cam means 20 ad secondary cam means 30, 31 provided on the external surface of redirecting means 16 placed side by side to the heat exchanger 3 and rotating around a vertical axis 15.

The redirecting means 16 consists of a bushing aligned on said vertical axis 15, expelling arm means 14 of the exhausted container 10 results downwardly restrained.

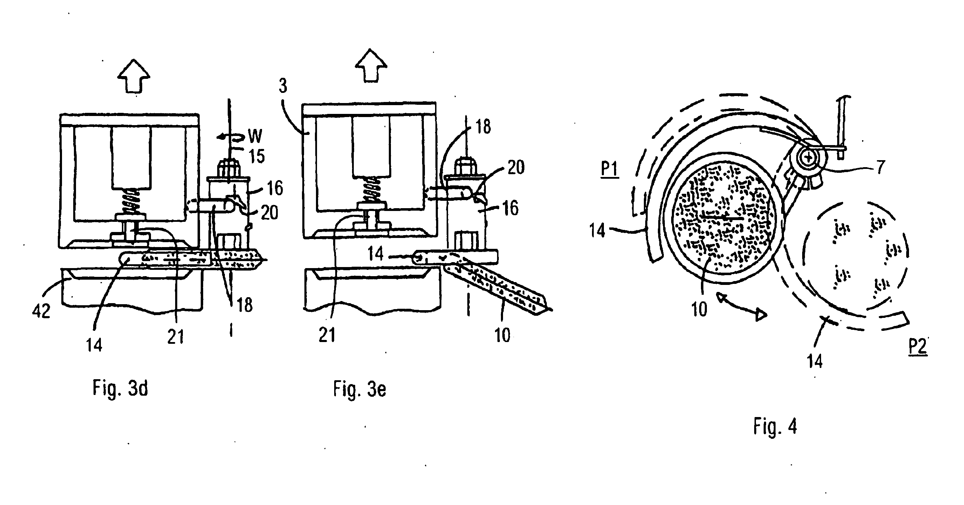

The expelling arm means 14, having an arcuated structure, results therefore rotating around said vertical axis 15 between a rest position P1 (visible in Figure 4), wherein said expelling arm means 14 is positioned near the filter support 42 and does not interact with the container 10 and an operating position P2 (visible in Figure 4) wherein said expelling arm means 14 interacts with the exhausted container 10 in order to move the exhaust container 10 from the filter support 42 towards a collector (not shown).

The expelling arm means 14 passes from the rest position P1 to the operating position P2, as more in detail it will be described in the following, by following according to a direction W (Figure 3d)a rotation of the redirecting means 16 around the axis 15.

The expelling arm means 14 rotates around an opposed direction in order to return in the rest position P1 under the bias action of elastic means 7 associated with the same expelling arm means 14.

The elastic means 7 comprises a spring, for example of the spiral type, or coil type, having a first end fixed to a portion of frame firmly connected with the casing 2 and a second end acting on the expelling arm means 14.

The machine 1 is further provided with a groove 40 affected by guides 23 provided below the drawer 41.

In this manner, the drawer 41 may be moved between a first, external end stroke stop 5, at which the drawer lies at a certain distance from the heat exchanger 3 in order to enables a new container 10 to be introduced into the filter 42, and a second, internal end stroke stop 4 at which the filter support 42 positions the container 10 at the heat exchanger 3.

A micro-switch 50 is associated with the second end stroke stop 4 designed for activating the distribution of the coffee as a result of the proper positioning of the filter support 42, when the container 10 is positioned below the heat exchanger 3.

In the following, the operation is described of the machine 1 subject of the present invention, by considering as starting configuration that shown in Figure 3a, corresponding to the positioning of the heat exchanger 3 in the relative, upper not operating position S2 and to the positioning of the expelling arm means 14 in the rest position P1, near the filter support 42.

The user getting ready to prepare a coffee, extracts the drawer 41, by causing to slide the relative guides 23 on the groove 40 until the first external end stroke stop 5, and inserts a container 10 into the filter support E.

Once the container has been inserted, the user, by causing the drawer 41 to slide, repositions the same drawer at the second internal end stroke stop 4 by activating the micro-switch 50.

The micro-switch 50 activates then the heat exchanger 3 that is moved from the upper, not-operating position S2 to the lower operating position S1 for distributing the coffee (Figures 3a to 3c).

During lowering of the heat exchanger from the not operating position S2 to the operating position S1, the control member 18 intercepts the secondary cam means 30, 31 by activating a first slight rotation Z and a second slight rotation Z', opposed to the first rotation Z, of the idle redirecting means 16 around the axis 15: that produces a slight swing of the expelling arm means 14, near the relative rest position P1 (Figure 4).

The presence of the secondary cam means 30, 31 is determined by merely constructive requirements and by the need of arranging the control member 18 at the positioning of the heat exchanger 3 in the lower position S1 relative to the distribution of the coffee (Figure 3c), just below the main cam means 20.

At the end of the coffee distribution, the machine 1 raises the heat exchanger 3 towards the upper, not-operating position S2 (Figure 3d).

During the transition of the heat exchanger 3 from the lower, operating position S1 to the upper, not-operating position S2, the control member 18 intercepts the main cam means 20 (Figure 3d and Figure 3e), by determining the rotation of the redirecting means 16 along the direction W, around the vertical axis 15.

Such rotation W of the redirecting means 16 causes the expelling arm means 14 to be actuated and moved from the rest position P1 up to intercept the container 10 inside the filter support (Figure 3d), to extract the same container 10 from the filter support E, and at reaching the operating position P2, to unload the same container 10 into a collecting seat (Figure 3e and Figure 4).

Simultaneously with the positioning of the expelling arm means 14 in the operating position P2, the heat exchanger 3 returns in the relative, upper, not-operating position S2 (Figure 3a) and the control member 18 leaves the main cam means 20 by making again idle the redirecting means 16.

In such manner, the elastic members 7, loaded by the displacement of the expelling arm means 14 from the position P1 to the position P2 may then recall the expelling arm means 14 in the rest position P1.

Repositioning and recalling the expelling arm means 14 determines a rotation, around the axis 15, of the idle redirecting means 16 opposed to the above mentioned direction W, which rotation enables to position the mentioned secondary cam means 30 at the control member 18 (Figure 3a).

With the above described operations the machine 1 automatically performs, and without the external involvement of a user, the unloading of the used container.

It results therefore extremely apparent that the above described machine 1 is capable of advantageously performing, in automatic manner and without any external intervention, the unloading of the used container.

It is to be highlighted that, the operating steps for achieving the extraction of the container from the filter support 42 and unloading the same container into a collecting seat are made by means of an extremely simple and practical technical solution.

It is to be added that the proposed machine allows, advantageously, to completely extract, in a simple and practical manner, the drawer 41 and the filter support 42, by facilitating the insertion of a new container.

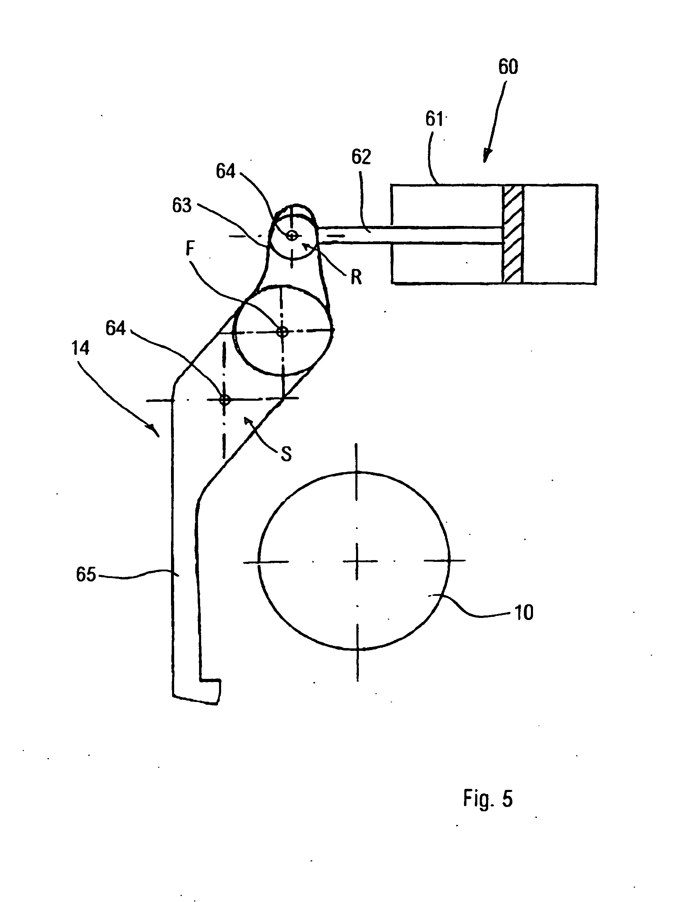

With reference to Figure 5, actuating means 60 is shown comprising for example an electromagnetic actuator 61 provided with a stem 62 suitable for rotating the expelling arm means 14 in order to transfer said expelling arm means 14 from the rest position P1 to the operating position P2, and vice versa.

The expelling arm means operates in such case as a lever and is provided with an appendage 63 connected to the stem 62 by means of a hinge 64, placed in a position indicated by R: in such manner the expelling arm means 14 results swinging around a point F constituting the fulcrum of the above mentioned lever.

Alternatively, in the case that is required by particular constructive requirements, the hinge 64 may be placed at a position S wherein the said hinge 64 results interposed between the fulcrum F and the region 65 of the expelling arm means 14 that comes into contact with the container 10.

In a not-shown variance, between the actuating means 60 and the expelling arm means 14 a further lever may be provided arranged for redirecting the movement and for enabling the actuating means to control the expelling arm means 14 even in those particular embodiments of the machine 1 wherein, for constructive reasons, for example connected to the encumbrances, the actuating means can not be positioned near the actuating arm.

Advantageously, the electromagnetic actuator 61 may be of the double-acting type, i.e. provided with a pair of coils that control, alternatively, the transferring of the expelling arm means 14 from the position P1 to the position P2.

Advantageously, such electromagnetic actuator may be activated by proper sensor means suitable for detecting a pre-established raising of the heat exchanger 3 during its movement towards the upper, not-operating position S2.

Alternatively, the electromagnetic actuator 61 may be of the simple-action type, in such case the electromagnetic actuator 61 comprises a spring arranged for bringing back the expelling arm means 14 from the operating position P2 to the rest position P1, or vice versa.

In an advantageous version, not shown, the actuating means 60 comprises a pneumatic actuator.

In another advantageous version, not shown, the actuating means 60 comprises an hydraulic actuator actuated by the same pump controlling the above mentioned reciprocating piston system that transfers the heat exchanger 3 from the lower, operating position S1 to the upper, not-operating position S2 (Figure 3a), and vice versa.

Alternatively, for actuating the hydraulic actuator may be provided a further pump arranged for supplying the hydraulic actuator.

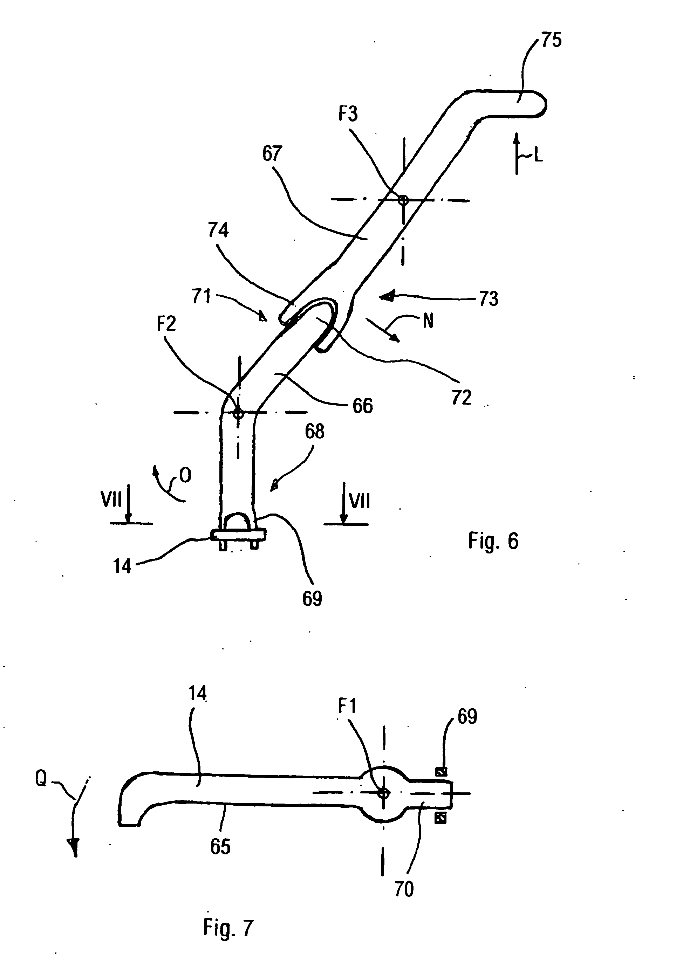

With reference to the Figures 6 and 7, a variance is shown of the machine 1 according to the invention, wherein the expelling arm means 14 is controlled by a first lever 66 co-operating with a second lever 67.

The first lever 66 is swinging around the respective fulcrum F2 and is provided at an end 68 with a bracket 69 arranged for surrounding a shank 70 obtained in the expelling arm means 14. The first lever 66 further comprises, at a further end 71 opposed to the end 68, a region 72 arranged for interacting with the second lever 67.

The second lever 67 is swinging around its respective fulcrum F3 and is provided, at an end 73, with a bracket 74 arranged for surrounding the region 72 of the first lever 66. The second lever 67 further comprises, at a further end 75 opposing the end 73, a support 75.

The expelling arm means 14 is coupled by rotation with the frame of the machine 1 so as to result swinging around a fulcrum F1 resulting interposed between the shank 70 and the region 65 of the expelling arm means 14 coming into contact with the container 10.

The support 75 is shaped so as to result suitable for coupling with the external control member 18 firmly connected to the heat exchanger 3 so that this latter directly controls the ejection of the container 10.

Alternatively, the support 75 may be coupled with the stem 62 of the actuating means 61 and, therefore, ejecting the container 10 may be made independent from the movement of the exchanger 3.

Alternatively, instead the further lever, or the further plurality of levers, a cable control device may be provided arranged for connecting the actuating means and the expelling arm means 14.

Ejecting a used container results according to the manners in the following described.

The actuating means 61, or the external control member 18, interacts with the support 75 by causing its translation in the direction indicated by the arrow L, that causes the rotation of the second lever 67, around the respective fulcrum F3, into the direction of the arrow N.

The second lever 67 activates the first lever 66 to rotate, around the respective fulcrum F2, in the direction of the arrow O. As a consequence, the expelling arm means 14 rotates around the fulcrum F1 along the direction of the arrow Q bringing the region 65 of the expelling arm means 14 to interact with the container 10 in order to eject the same container 10 from the filter support 42.

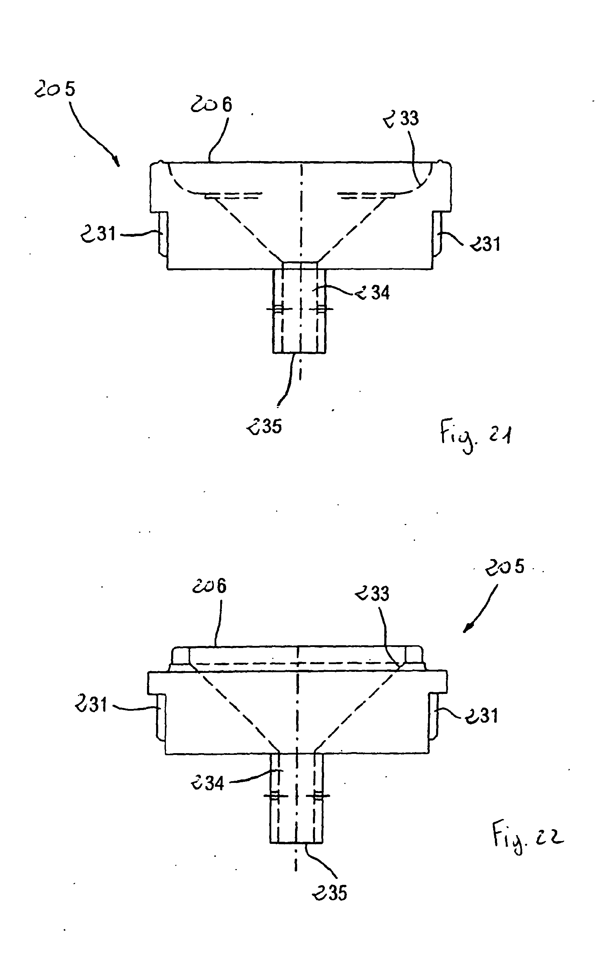

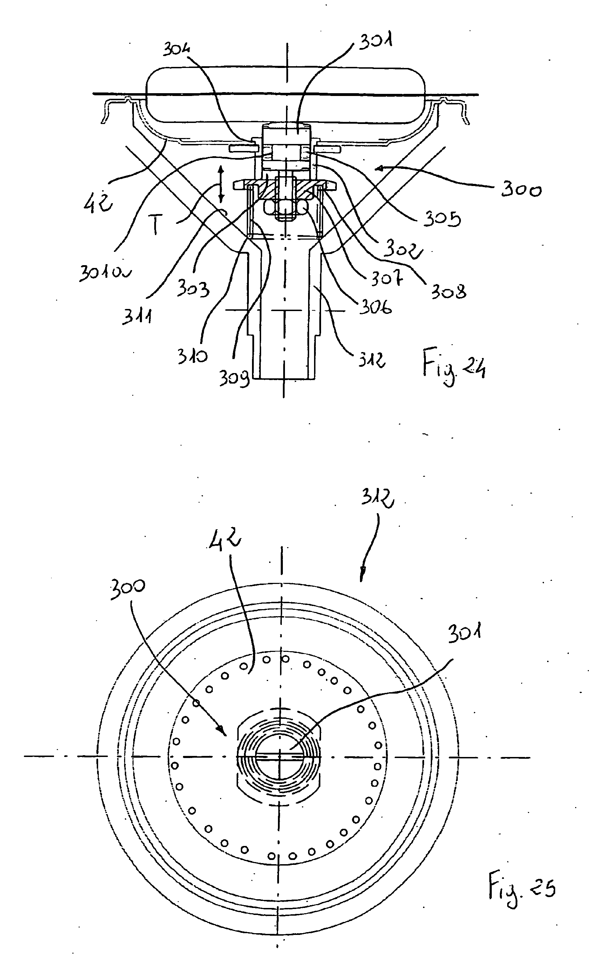

With reference to the Figures 24 to 31, extracting means 300 is shown arranged for raising an exhausted container 10 from the filter support means 42 in order to allow the said container 10 to be ejected by the expelling arm means 14.

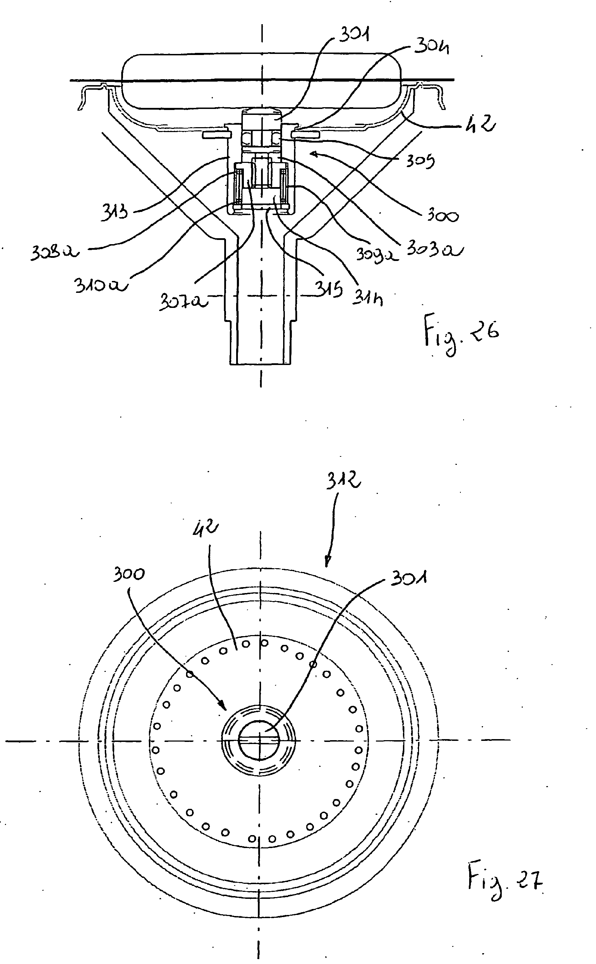

The employment of the extracting means 300 enables an easy ejection of the container 10 since the said employment of the extracting means 300 prevents the aptitude of the said container 10 for gluing itself to the filter support means 42. As shown in the Figures 24 and 25, the extracting means 300 comprises pushing means 301 sliding in the direction of the arrow T inside a seat 303 delimited by a tubular support 302 firmly fixed to the filter support means 42.

The filter support means 42 is provided, at an its central portion, with a hole 304 through which the pushing means 301 results passing, in order to interact with the container 10.

Between a central position 301a of the pushing means 301 and the tubular support 302 sealing means 305 is interposed, arranged for preventing the already prepared beverage from penetrating into the interior of the seat 303.

The pushing means 301 is fixed, by means of a threaded coupling 306, to a small plate 307 resting on a first end 308 of a spring 309, such spring 309 being provided with a second end 310 resting on inclined walls 311 of funnel filter holding means 312 associated with the drawer 41.

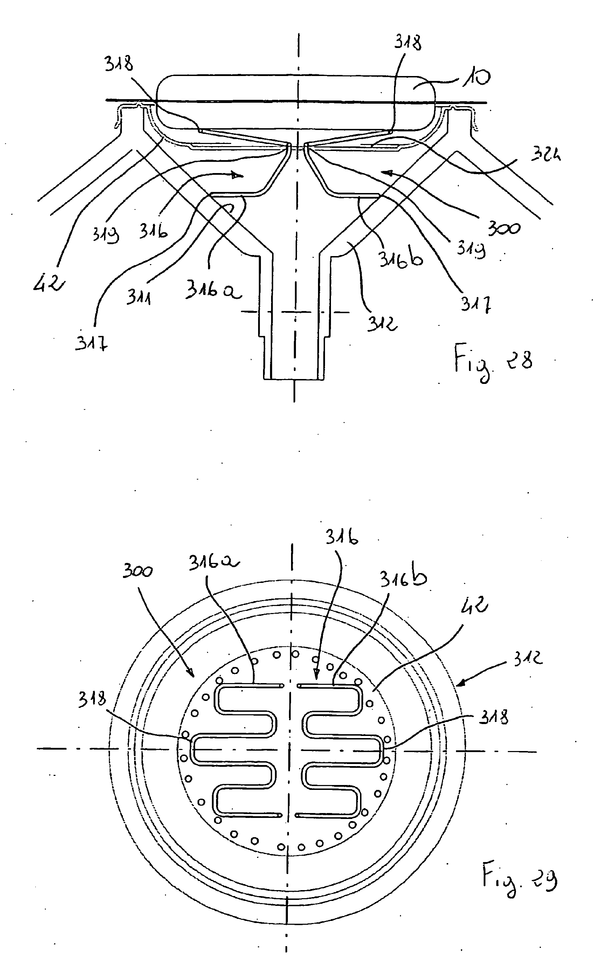

As shown in the Figures 26 and 27, the pushing means 301 is sliding inside a further seat 303a obtained into a casing 313 firmly fixed to the filter support means 42.

The pushing means 301 is fixed to a further small plate 307a vertically moving inside a chamber 314, laterally delimited by the casing 313 and downwardly closed by a plate 315.

Inside the chamber 314, a further spring 309a is contained having a further first end associated with the further small plate 307a and a further second end 310a lying resting on the plate 315.

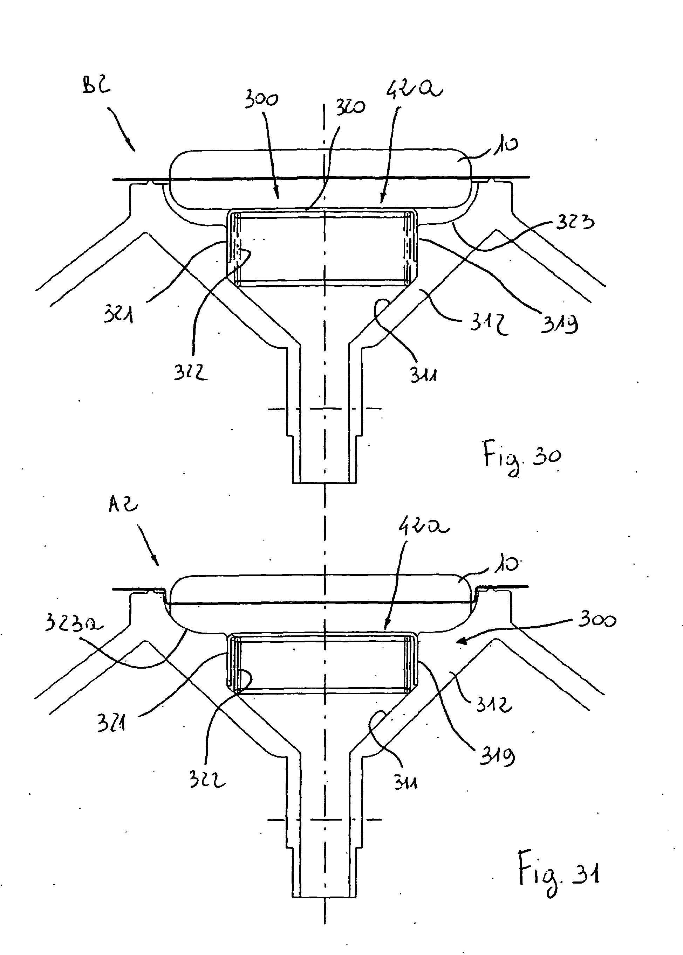

As shown in the Figures 28 and 29, the extracting means 300 comprises elastic means 316 consisting of a first wire 316a and a second wire 316b made, for example of metallic material and shaped so as to constitute a spring suitable for interacting with the container 10 in order to raise the said container 10 with respect to a bottom region 324 of the filter support means 42.

Each of the said first wire 316a and second wire 316b is provided with first end portions 317 placed resting on the inclined walls 311 of the funnel filter holding means 312 and second end portions 318 arranged for interacting with the container 10.

The filter support means 42 is provided, at a central region thereof, with holes through which the first wire 316a and the second wire 316b result passing.

As shown in the Figures 30 and 31, the extracting means 300 comprises filter support means 42a, such filter support means 42a resulting vertically moving inside a hollow 319 identified inside the funnel filter holding means 312.

The funnel filter holding means 312 is further provided with a hollow 323 arranged for receiving the container 10 during the passage of the diluting liquid through the said container 10 for preparing a dose of beverage.

The filter support means 42a comprises an upper wall 320 provided with a plurality of holes arranged for allowing the passage of the prepared beverage and a side wall 321 arranged for interacting with the hollow 319 by leading, in this manner, the translation of the filter support means 42a.

Spring means 322 is interposed between the filter support means 42a and the funnel filter holding means 312, arranged for transferring the filter support means 42a from a lowered position, indicated with A2 in figure 31, wherein the container 10 is resting on a bottom region 323a of the hollow 323, to a raised position, indicated with B2 in Figure 30, wherein the container 10 is raised from the bottom region 323a and is ready for being removed from the filter support means 42 by the expelling arm means 14.

With reference to the Figures 30 and 31, preparing a dose of beverage results in the manners described in the following.

A user, after having extracted the drawer 41, places a container 10 on the funnel support means 42a. Such container 10 occupies, in this step of the preparing cycle of the beverage, the raised position B2, therefore the said container 10 does not lie in contact with the bottom region 323a of the hollow 323, but is slightly spaced from this latter due to the action of the extracting means 300.

Subsequently, the user introduces the drawer 41 into the machine 1.

Still subsequently, the heat exchanger 3 is transferred from the upper not operating position S2 to the lower operating position S1 and, therefore, the said heat exchanger 3 brings the container 10 to occupy the lowered position A2, by pushing the said container 10 into the interior of the hollow 323, overcoming the action of the extracting means 300.

Once the distribution of diluting liquid is finished, the exchanger 3 is brought to the upper not operating position S2.

At this point, the extracting means 300 is capable of transferring again the container in the raised position B2 wherein the said container 10 is ready for interacting with the expelling arm means 14.

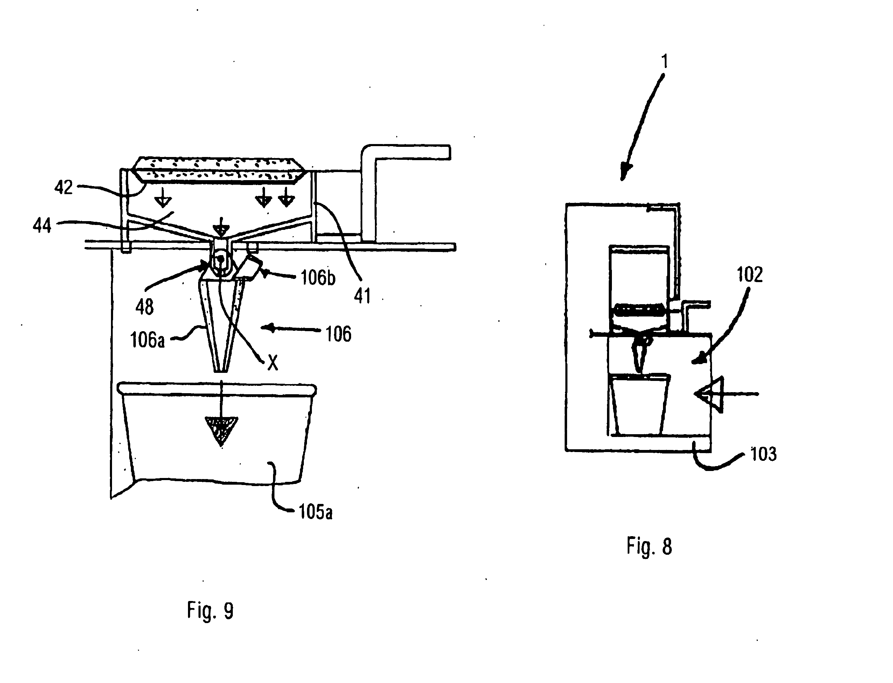

With reference to the Figures 8 to 11, a machine 1 is shown for distributing beverages, for example hot beverages, provided with a seat 102 for housing containers 105a, 105b, for example cups, respectively with a greater and a smaller vertical size.

Such housing seat 102 identifies downwardly a support plane 103 of such cups 105a, 105b, and upwardly at least an outlet opening 48 of the beverages to be distributed into the said cups. The distance between the outlet opening and the support plane 103 is defined in a fixed manner, i.e. variable configurations of the said support plane with respect to the said outlet opening are not provided.

The distributing nozzle 106, subject of the invention, positioned near the outlet opening 48 provided by the distributing machine 1, comprises essentially a main nozzle 106a, for example laterally hinged with respect to the said outlet opening 48, for conveying into a cup of smaller vertical size beverages flowing out from the same opening 48 faced to said main nozzle 106a, for example espresso coffee or, possibly, cappuccino.

An additional nozzle 106b, stiffly associated with the main nozzle 106a, of smaller longitudinal extension, enables the beverages flowing out from the same outlet opening 48 to be conveyed into a cup 105b of greater vertical size.

In effect, by positioning the cup 105a of vertical smaller size on the support plane 103 of the housing seat 102, it is possible to face the corresponding inlet section of the same cup 105a to the outlet opening 48 of the beverages, communicating in this case with the main nozzle 106a, in substantially vertical configuration, then to proceed with the distributing step (Figure 9).

In the case there was the need of positioning on the support plane 103 a cup 105b of greater vertical size, in order to face the corresponding inlet section to the outlet opening 48 of the beverages, it is necessary to steady intercept the main nozzle 106a with the upper border of the same cup 105b.

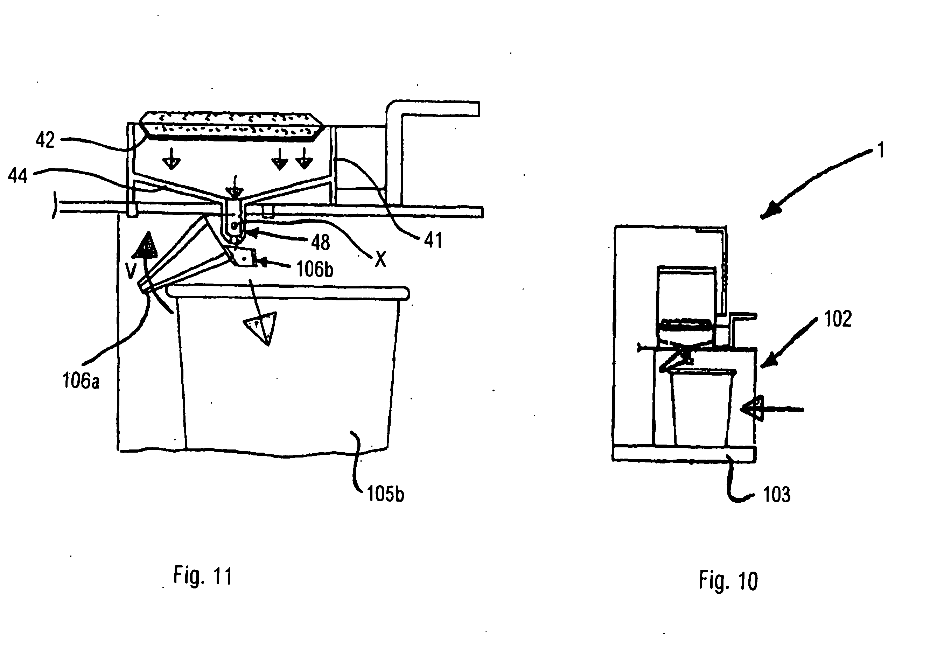

Such intercepting produces the rotation along V, around an axis X, of the main nozzle 106a by an angle such to make the outlet opening 48 of the beverages communicating with the additional nozzle 106b, stiffly rotating with the same main nozzle 106a, enabling then the selected beverage to be distributed, for example American coffee, barley, tea (Figure 11).

The passage form the main nozzle 106a to the additional nozzle 106b is simply obtained by intercepting with the upper border of the cup 105b the same main nozzle 106a that rotates, therefore, along V by an angle suitable for bringing in communication the relative outlet opening 48 with the additional nozzle 106b.

The stabilisation of such configuration is assured by the beating of the upper border of the cup 105b against the main nozzle 106a during the distributing step of the beverages through the additional nozzle 106b.

Once the distributing step was finished, then, by removing the cup 105b from the support plane 103 of the housing seat 102, the main nozzle 106a returns in the vertical configuration that assures the communication of the same main nozzle 106a with the outlet opening 48. In this manner, by using nozzles, main nozzle 106a and additional nozzle 106b, of different longitudinal extensions according to the size of the cups 105a, 105b into which it is necessary to distribute the selected beverages, it is possible to maintain substantially constant the distances between the relative inlet sections of the cups 105a, 105b and the corresponding outlet opening 48 of the beverages.

In effect, a main nozzle 106a of greater longitudinal extension is associated with cups 105a of smaller vertical size, and vice versa an additional nozzle 106b of smaller longitudinal extension is associated with cups 105b of greater vertical size.

By doing so, it is possible to assure in optimal manner a proper distributing step of the beverages into the relative cups 105a, 105b without producing any projecting type of splashes and/or spurts of the same beverages outside the same cups 105a, 105b.

That allows to reduce in particular the interventions of maintenance both on the distributing machine and on the distributing nozzle, by preventing at the same time to much frequent cleaning interventions of the housing seat 102.

In this manner, it is further advantageously assured the constancy of the amount of beverage that is distributed into the corresponding cup 105a, 105b.

The distributing nozzle 106, subject of the invention may be achieved with the relative nozzles, main nozzle 106a and additional nozzle 106b, of interchangeable type, so as to allow, in irrelevant manner, by choice, the substitution of one or the other.

It is possible on the other hand to provide a plurality of additional nozzle 106b associated with the main nozzle 106a, mutually stiffly associates, with decreasing longitudinal extensions.

The nozzles, the main nozzle 106a and the additional nozzle 106b, may be advantageously made according to a geometry having the shape of a truncated cone, with increasing section by approaching the said outlet opening 48.

The relative axes may be in irrelevant manner mutually skew, or concurrent, for example substantially orthogonal, as well as said relative axes allow a proper transition from the main nozzle 106a to the additional nozzle 106b, and vice versa, as a function of the different vertical size of the cups 105a, 106b.

It is further to be highlighted that, the proposed distributing nozzle 106 is simple to be produced and is characterised by a restricted number of components, with full advantage for the producing costs, that therefore result very limited.

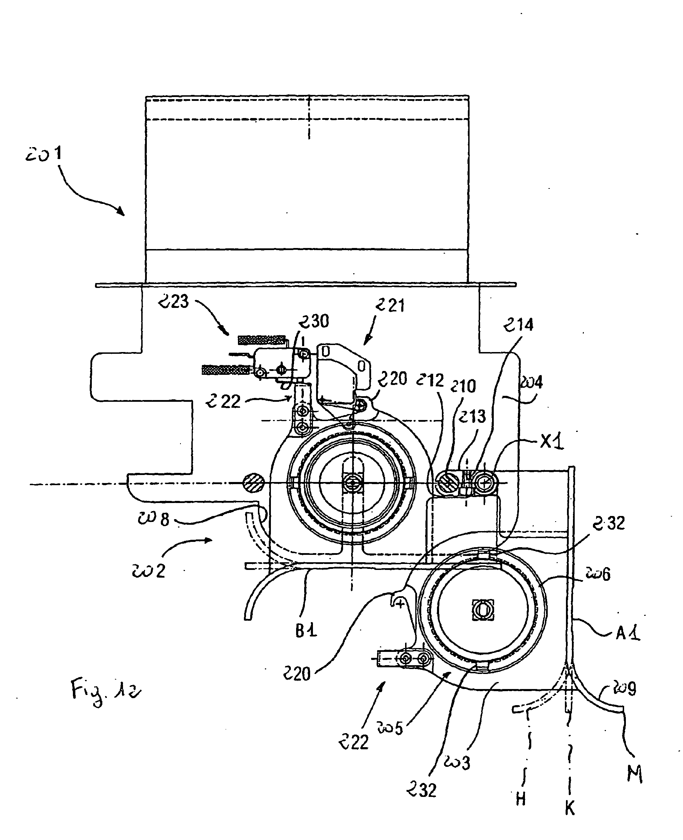

With reference to the Figures 12 to 15, a machine 201 is shown for preparing espresso coffee comprising a loader 202 of containers or tablets, of powder of coffee, provided with a shutter 203, rotatably supported by a base body of the machine 201.

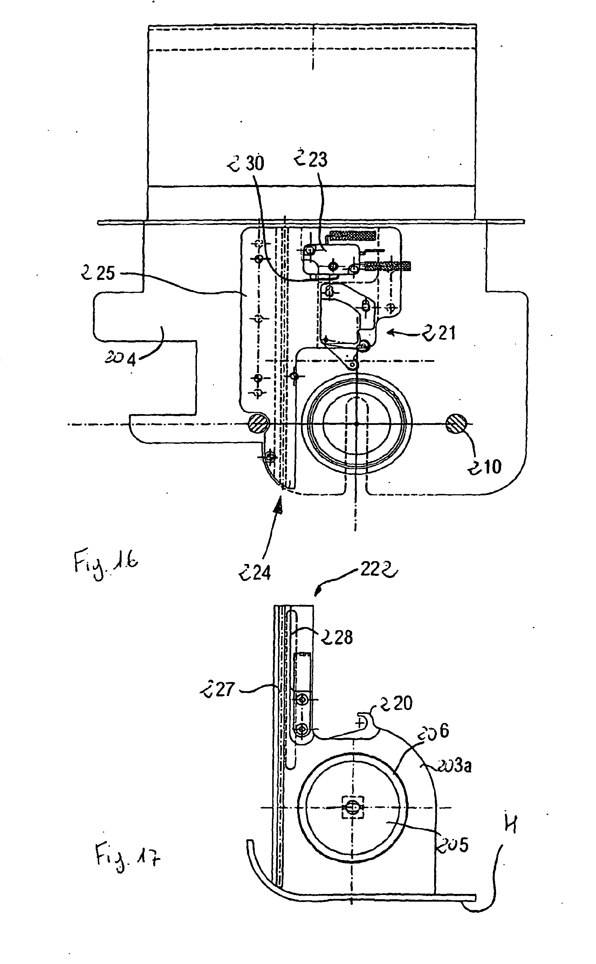

With the shutter 203 there is associated cup means 205, having the shape of funnel, whose upper border 206 is suitable for supporting a filter 207 (Figure 18), consisting, for example, of a disk of metal sheet carrying a plurality of holes of small diameter, suitable for receiving a container.

The shutter 203 may be rotated around a vertical axis X1 in order to pass from a loading position, indicated as Al in Figure 12, wherein an already used container is taken away from the cup 205 and possibly substituted by a new container, to an operating position, indicated as B1 in Figure 12, wherein the cup 205 results contained inside the base body 204 and the container is brought to interact with hot water distributing means, not shown.

The shutter 203 is provided at the front with a containing wall H extending along a curvilinear profile and shaped so as to adapt itself to the profile of the portion 208 of the base body 204 with which the shutter 203 comes to interact at the operating position B1.

Alternatively, a containing wall K may be provided having a linear profile, or a containing wall M provided with an appendage 209 protruding towards a user and suitable for constituting a handle arranged for facilitating the opening of the shutter 203 by the user self.

The shutter 203 is connected to a post 210 of the base body 204 by means of a first and a second connecting element 211a, 211b, shown in more detail in Figure 23, each of said connecting elements 211a, 211b comprising a first half-shell 212 and a second half-shell 213 mutually fixed to a screw 214 and identifying a first seat 215 arranged for receiving the post 210 and a second seat 216 arranged for receiving hinge means 217 firmly fixed to the shutter 203.

The hinge means 217 comprises a first pin 218 suitable for being received into the second seat 216 of the first connecting element 211a and a second pin 219 suitable for being received into the second seat 216 of the second connecting element 211b.

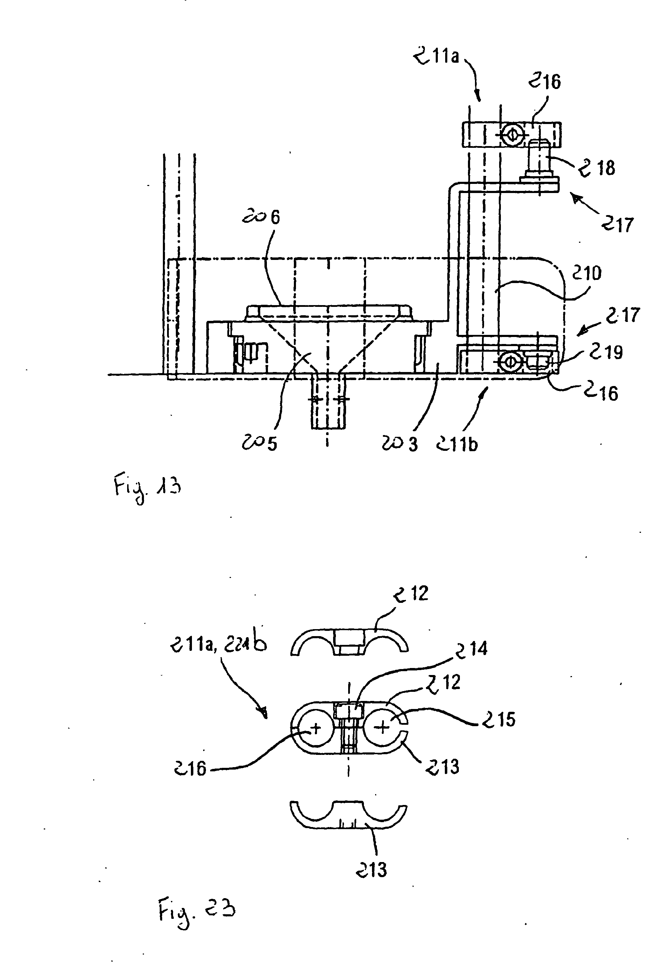

With reference to the Figures 14 and 15, it is shown how the first connecting element 211a and the second connecting element 211b may be height positioned in adjustable manner by causing them to slide along the post 210 and may then be blocked at the desired position by tightening the screws 215.

The distance between the first connecting element 211a and the second connecting element 211b may, therefore, be fixed so that a user, by raising the shutter 203, as shown in Figure 14, may cause a partial insertion of the first pin 218 into the second seat 216 of the first connecting element 211a, by disengaging, in such manner, the second pin 219 from the second seat 216 of the second connecting element 211b. the shutter 203, owing to a slight coupling clearance present between the first pin 218 and the relative seat 216, may then be rotated towards the exterior, as shown in Figure 15, and be removed from the base body 204 in order to be subjected to cleaning operations.

The shutter 203, owing to the use of the pair of connecting elements 211a, 211b, may be mounted apart and subsequently be fixed to the base body 204, when the said base body 204 has already been almost fully assembled: in such manner, advantageously, it is possible to produce universal base bodies 204 and to associate with said universal base bodies 204, during the final step of the producing cycle, a hinged shutter, or a sliding drawer, that will be described more in detail in the following, on the base of the requirements of a user.

That enables to remarkably simplify the production since a high degree of standardisation is introduced between the different types of machine 201 made by a same producer.

The shutter 203 further comprises hook coupling means 220 suitable for engaging with pressure blocking means 221 of known type suitable for holding the shutter 203 at the proper position during the operation of the machine 201.

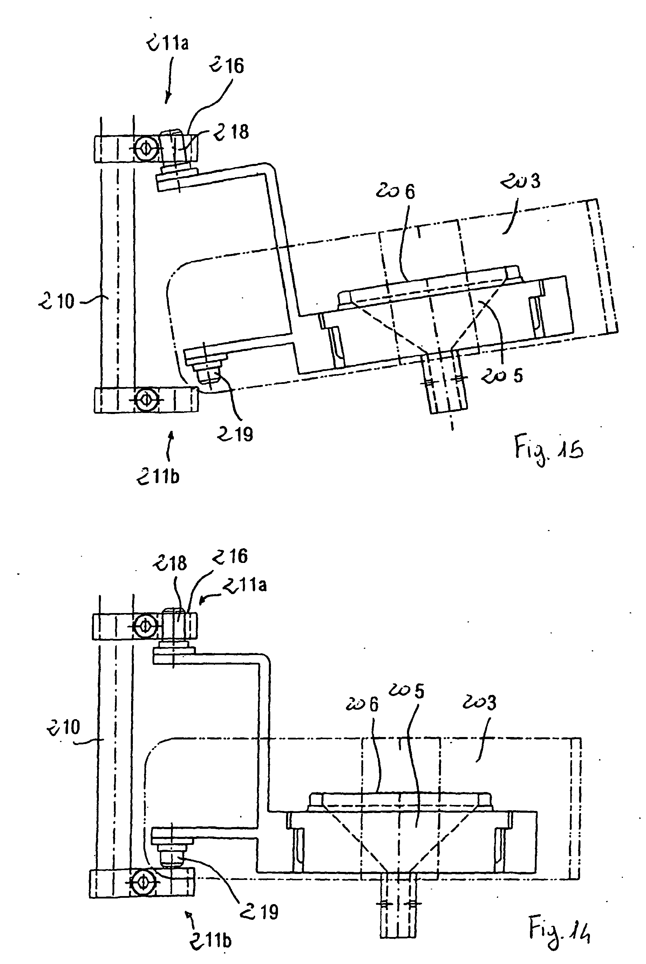

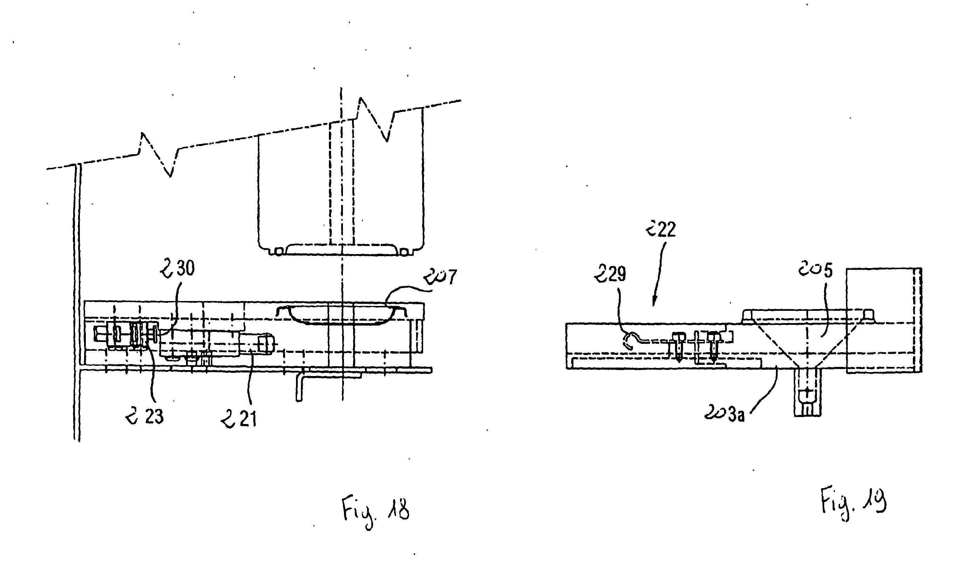

Push-button means 222 is firmly fixed to the shutter 203, arranged for actuating switch means 223 connected to the base body 204, said switch means 223 being suitable for enabling the activation of the machine 201, and in particular the hot water to flow out from the above mentioned distributing means. With reference to the Figures 16 to 20, a version is shown of the machine 201 wherein the shutter 203 is substituted by a drawer 203a sliding coupled with guide means 224 firmly fixed to support means 225 fixed to the base body 204.

The drawer 203a, in this case, is moving between a back position for loading-unloading the containers and an advanced working position.

The guide means 224 comprises tooth means 226 engaging into relative groove means 227 obtained in the drawer 203a. The drawer 203a further comprises socket means 228 arranged for receiving screw means, not shown, constituting an end stroke stop for the drawer 203 at its back position for loading-unloading the containers.

The tooth means 226 and the relative groove means 227 may show a rectangular section, as shown in the Figures 16, 17 and 18, or have a trapezoidal section with the sides diverging upwardly.

With reference to the Figures 18 and 19, the push-button means 222 is shown that is provided with elastically deformable elements 229 suitable for interacting with a moving portion 230 of the switch means 223. The elastically deformable means 229 may comprise for example flexible lamina means, or helical spring means

The deformability of the elements 229 enable that the said elements 229 may properly actuate the switch means 223 even in presence of positioning errors. Such elements 229, in effect, compensate for mounting inaccuracies with relative extensions or shortenings of small size.

The machine 201 further comprises pressure blocking means 221 co-operating with hook coupling means 220 obtained in the drawer 203a.

In order to block the drawer 203a, the said drawer 203a is pushed against the blocking means 221 so that the cup is held in position at the hot water distributing means. After preparing a dose of coffee, the drawer 203a, pressed by the user, executes an additional section of stroke in direction of the blocking means 221 by releasing from the said blocking means 221 the hook coupling means 220, so that the said drawer 203a may be brought to its position for loading-unloading containers.

Both the switch means 223 and the pressure blocking means 221 are fixed to the support means 225; that allows that they are placed in the proper relative positions in order to be able to be simultaneously, respectively actuated, during the operating phase, by the push-button means 222 and by the hook coupling means 220 mounted aboard the drawer 203a.

In this manner, the assembly of the machine 1 results quite simple, as the switch means 223 and the blocking means 221 may be fixed apart to the support means 225 and subsequently the support means 225 may be assembled with the base body 204 by reducing the risks of mounting errors.

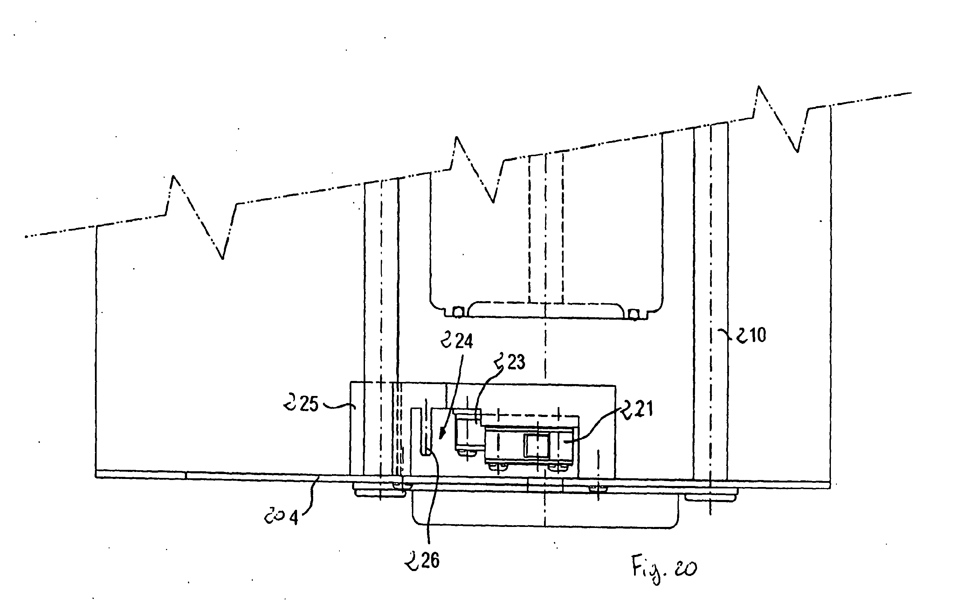

With reference to the Figures 21 and 22, the cup means 205 is shown arranged for receiving containers of different sizes.

The cup means 205 is provided with centring means 231 suitable for being received by form coupling into relative notches 232 obtained in the drawer 203a, or in the shutter 203.

The cup means 205 shows equal external dimensions and is internally provided with filter holding means 233 suitable for receiving containers of pre-established dimension, for example containers of great dimensions, in the version of which at the Figure 21, or containers of more limited dimensions, in the version of which at the Figure 22.

In the case it is necessary to vary the amount of espresso coffee to be prepared, it is sufficient to extract one of said cup means 205 and to substitute with another one of said cup means 205 having filter holding means 233 such to support a container of suitable dimensions and therefore suitable for preparing the desired dose of coffee.

The cup means 205 is provided with a lower portion 234 provided with a distributing opening 235 through which the prepared espresso coffee is poured into a proper container and may be taken by a consumer.

With the said lower portion 234 there is associated a distributing nozzle, not shown, providing for facilitating the prepared coffee to be transferred from the cup means 205 to the above-mentioned container.

## Claims

1. Apparatus for preparing beverages, comprising receiving means (203a) suitable for receiving container means (10) containing a base substance of the beverage to be prepared, said receiving means (203a) being slidable along guide means (224) between a loading position, in which said receiving means (203a) is arranged externally of a base body (204) of said apparatus (201) for receiving said container means (10), and an operating position, in which said receiving means (203a) is arranged internally of said base body (204) for bringing said container means (10) to interact with liquid distributing means, **characterised in that** it comprises pressure blocking means (221) suitable for keeping said receiving means (203a) in said operating position.

2. Apparatus according to claim 1, wherein said receiving means comprises a first portion (H) suitable for being handled by a user and a second portion (220), opposed to said first portion, suitable for interacting with said pressure blocking means (221).

3. Apparatus according to claim 2, wherein said second portion comprises hook coupling means (220) so configured as to engage with said pressure blocking means (221).

4. Apparatus according to any one of the preceding claims, and further comprising switch means (223) arranged for controlling operation of said apparatus.

5. Apparatus according to claim 4, wherein said receiving means (203a) further comprises a further portion (222) arranged for actuating said switch means (223).

6. Apparatus according to claim 5, as appended to claim 2, or 3, or to claim 4 as appended to claim 2, or 3,
wherein said further portion (222) is opposed to said first portion (H).

7. Apparatus according to claim 5, or 6, wherein said further portion comprises push-button means (222).

8. Apparatus according to claim 7, wherein said push-button means (222) comprises elastically deformable elements (229) suitable for interacting with a moving portion (230) of said switch means (223).

9. Apparatus according to claim 8, wherein said elastically deformable elements (229) comprises flexible lamina means.

10. Apparatus according to claim 8, wherein said elastically deformable elements (229) comprises helical spring means.

11. Apparatus according to any one of the preceding claims, wherein said guide means (224) is associated with said base body (204).

12. Apparatus according to claim 11, wherein said guide means (224) comprises tooth means (226) engaging into groove means (227) obtained in said receiving means (203a).

13. Apparatus according to claim 12, wherein said tooth means (226) and said groove means (227) have a rectangular section.

14. Apparatus according to claim 12, wherein said tooth means (226) and said groove means (227) show a trapezoidal section.

15. Apparatus according to any one of claims 11 to 14,
wherein said receiving means (203a) further comprises socket means. (228) arranged for receiving screw means acting as end stroke stop for said receiving means (203a).

16. Apparatus according to any one of the preceding claims, wherein said receiving means (203a) is provided with cup means (205) suitable for receiving said container means (10).

17. Apparatus according to claim 16, wherein said cup means (205) is suitable for being extracted from said receiving means (203a).

18. Apparatus according to claim 16, or 17, wherein said cup means (205) is provided with centring means (231) suitable for being shapingly received into respective notch means (232) obtained in said receiving means (203a).

19. Apparatus according to any one of claims 16 to 18, wherein said cup means comprises a plurality of mutually interchangeable cups (205).

20. Apparatus according to claim 19, wherein said cups (205) have external dimensions equal to each other and each of said cups (205) is internally provided with filter holding means (233) suitable for receiving containing means (10) of a pre-established size.

21. Apparatus according to any one of claims 16 to 20, wherein said cup means (205) is provided with a lower portion (234) comprising a distributing opening (235) for said beverages.

22. Apparatus according to claim 21, wherein a distributing nozzle is associated with said lower portion (234).

23. Apparatus according to any one of the preceding claims, and further comprising expelling arm means (14) arranged for expelling said container means (10) from said receiving means (203a) after that said container means (10) has been used.

24. Apparatus according to any one of the preceding claims, and further comprising at least a seat (102) for housing container (105a, 105b) with variable vertical size, said seat downwardly identifying a support plane (103) for such containers (105a, 105b) and upwardly at least a distributing opening (48) of said beverages.

25. Apparatus according to claim 24, and further comprising a distributing nozzle (106) comprising a main nozzle (106a) and at least one additional nozzle (106b) associated with said main nozzle (106a), said main nozzle (106a) and said at least one additional nozzle (106b) being oscillating around an axis (X) substantially parallel to said support plane.

26. Apparatus according to claim 25, wherein said main nozzle (106) is removably hinged to an upper region of said housing seat (102) in order to convey said beverages flowing out from said distributing opening (48) into said container (105a) with smaller vertical size.

27. Apparatus according to any one of the preceding claims, wherein with said receiving means (203a) extracting means (300) is associated arranged for transferring said container means (10) from a lowered position (A2) in which said container means (10) is in contact with said receiving means (203a) to a raised position (B2) in which said container means (10) is separated from said receiving means (203a).

28. Apparatus according to claim 27, wherein said extracting means (300) comprises pushing means (301) slidable inside a seat (303) defined by a tubular support (302) fixed to said receiving means (42).

29. Apparatus according to claim 28, wherein said receiving means (203a) is provided with a hole (304) through which said pushing means (301) passes in order to interact with said container means (10).

30. Apparatus according to claim 28, or 29, wherein said pushing means (301) is fixed to a plate (307) resting on a first end (308) of a spring (309), said spring (309) being provided with a second end (310) resting on funnel filter holding means (312) supporting said receiving means (203a).

31. Apparatus according to claim 27, wherein said pushing means (301) is slidable inside a further seat (303a) obtained in a casing (313) fixed to said receiving means (203a).

32. Apparatus according to claim 31, wherein said pushing means (301) is fixed to a further plate (307a) vertically moving inside a chamber (314) laterally defined by said casing (313) and downwardly closed by a supporting element (315).

33. Apparatus according to claim 32, wherein inside said chamber (314) a further spring (309a) is contained, having a further first end associated with said further plate (307a) and a further second end (310a) resting on said supporting element (315).

34. Apparatus according to claim 33, wherein said extracting means (300) comprises elastic wire means (316) .

35. Apparatus according to claim 34, wherein said elastic wire means comprises a first wire (316a).

36. Apparatus according to claim 35, wherein said elastic wire means further comprises a second wire (316b).

37. Apparatus according to claim 36, wherein said first wire (316a) and said second wire (316b) are shaped so as to constitute a spring suitable for interacting with said container means (10) in order to raise said container means (10) with respect to a bottom region (324) of said receiving means (203a).

38. Apparatus according to claim 37, wherein said extracting means (300) comprises filter support means (42a) vertically movable inside a seat (319) identified inside funnel filter holding means (312) supporting said filter support means (42).

39. Apparatus according to claim 38, wherein said funnel filter holding means (312) is further provided with a cavity arranged for receiving said container means (10) during the passage of diluting liquid through said container means (10) in order to prepare a dose of said beverages.

40. Apparatus according to claim 39, wherein said filter support means (42a) comprises an upper wall (320) provided with a plurality of holes arranged for enabling the passage of said beverages and a side wall (321) arranged for interacting with said cavity (319) in order guide said filter support means (42a).

41. Apparatus according to any one of claims 38 to 40,
wherein between said filter support means (42a) and said funnel filter holding means (312) spring means (322) is interposed arranged for transferring said filter support means (42a) from said lowered position (A2) to said raised position (B2).

## Patentansprüche

1. Vorrichtung zur Vorbereitung von Getränken, mit einem Aufnahmemittel (203a), das zur Aufnahme eines Behältermittels (10) geeignet ist, das eine Basissubstanz für das vorzubereitende Getränk enthält, wobei das Aufnahmemittel (203a) entlang eines Schiebemittels (224) zwischen einer Ladeposition, in der das Aufnahmemittel (203a) außerhalb eines Basiskörpers (204) der genannten Einrichtung (201) zum Aufnehmen des Behältermittels (10) angeordnet ist, und einer Betriebsposition verschiebbar ist, in der das genannte Aufnahmemittel (203a) innerhalb des genannten Basiskörpers (204) angeordnet ist, um das genannte Behältermittel (10) zum Zusammenwirken mit einem Flüssigkeitsverteilungsmittel zu bringen, **dadurch gekennzeichnet, dass** sie ein Druckblockiermittel (221) aufweist, das geeignet ist, um das genannte Aufnahmemittel (203a) in der genannten Betriebsposition zu halten.

2. Vorrichtung nach Anspruch 1, bei der das genannte Aufnahmemittel einen ersten Teil (H) aufweist, der zur Handhabung durch einen Benutzer geeignet ist, sowie einen zweiten Teil (220) aufweist, der dem ersten Teil gegenüberliegt und zum Zusammenwirken mit dem genannten Druckblockiermittel (221) geeignet ist.

3. Vorrichtung nach Anspruch 2, bei der der genannte zweite Teil ein Hakenkopplungsmittel (220) aufweist, das so ausgebildet ist, dass es mit dem genannten Druckblockiermittel (221) zusammenwirkt.

4. Vorrichtung nach irgendeinem der vorhergehenden Ansprüche, die ferner ein Schaltmittel (223) aufweist, das zur Steuerung der genannten Vorrichtung angeordnet ist.

5. Vorrichtung nach Anspruch 4, bei der das genannte Aufnahmemittel (203a) ferner einen weiteren Teil (222) aufweist, der zur Betätigung des Schaltmittels (223) ausgebildet ist.

6. Vorrichtung nach Anspruch 5, soweit abhängig von Anspruch 2 oder 3 oder 4, soweit abhängig von Anspruch 2 oder 3, bei der der genannte weitere Teil (222) dem ersten Teil (H) gegenüberliegt.

7. Vorrichtung nach Anspruch 5 oder 6, bei der der genannte weitere Teil ein Drucktastenmittel (222) aufweist.

8. Vorrichtung nach Anspruch 7, bei der das genannte Drucktastenmittel (222) elastische deformierbare Elemente (229) aufweist, die zum Zusammenwirken mit einem sich bewegenden Teil (230) des genannten Schaltmittels (223) ausgebildet sind.

9. Vorrichtung nach Anspruch 8, bei der die genannten elastisch deformierbaren Elemente (229) flexible Plättchenmittel aufweisen.

10. Vorrichtung nach Anspruch 8, bei der das genannte elastisch deformierbare Element (229) Schraubenfedermittel aufweist.

11. Vorrichtung nach irgendeinem der vorhergehenden Ansprüche, bei der das genannte Führungsmittel (224) mit dem genannten Basiskörper (204) zusammenhängt.

12. Vorrichtung nach Anspruch 11, bei der das genannte Führungsmittel (224) ein Zahnmittel (226) aufweist, das in ein Nutmittel (227) eingreift, das in dem genannten Aufnahmemittel (203a) vorgesehen ist.

13. Vorrichtung nach Anspruch 12, bei der das genannte Zahnmittel (226) und das genannte Nutmittel (227) einen rechteckförmigen Abschnitt aufweisen.

14. Vorrichtung nach Anspruch 12, bei der das genannte Zahnmittel (226) und das genannte Nutmittel (227) einen trapezförmigen Abschnitt aufweisen.

15. Vorrichtung nach irgendeinem der Ansprüche 11 bis 14, bei der das genannte Aufnahmemittel (203a) ferner ein Sockelmittel (228) aufweist, das zur Aufnahme eines Schraubenmittels geeignet ist, das als Endanschlag für das genannte Aufnahmemittel (203a) wirkt.

16. Vorrichtung nach irgendeinem der vorhergehenden Ansprüche, bei der das genannte Aufnahmemittel (203a) mit einem Tassenmittel (205) versehen ist, das zur Aufnahme des genannten Behältermittels (10) ausgebildet ist.

17. Vorrichtung nach Anspruch 16, bei der das genannte Tassenmittel (205) aus dem genannten Aufnahmemittel (203a) ausgezogen werden kann.

18. Vorrichtung nach Anspruch 16 oder 17, bei der das genannte Tassenmittel (205) mit einem Zentriermittel (231) versehen ist, das zur formmäßigen Aufnahme in einem zugeordneten Zapfenmittel (232) ausgebildet ist, das in dem genannten Aufnahmemittel (203a) vorgesehen ist.

19. Vorrichtung nach irgendeinem der Ansprüche 16 bis 18, bei der das genannte Tassenmittel eine Mehrzahl von miteinander austauschbaren Tassen (205) aufweist.

20. Vorrichtung nach Anspruch 19, bei der die genannten Tassen (205) äußere Abmessungen aufweisen, die einander gleich sind, und bei der jede der genannten Tassen (205) intern mit einem Filterhaltemittel (233) versehen ist, das zur Aufnahme eines Behältermittels (10) einer vorbestimmten Größe geeignet ist.

21. Vorrichtung nach irgendeinem der Ansprüche 16 bis 20, bei der das genannte Tassenmittel (205) mit einem unteren Abschnitt (234) versehen ist, der eine Verteileröffnung (235) für die genannten Getränke aufweist.

22. Vorrichtung nach Anspruch 21, bei der ein Verteilerventil mit dem genannten unteren Abschnitt (234) zusammenhängt.

23. Vorrichtung nach irgendeinem der vorhergehenden Ansprüche, die ferner ein Austreibarmmittel (14) aufweist, das zum Austreiben des genannten Behältermittels (10) aus dem genannten Aufnahmemittel (203a) geeignet ist, nachdem das genannte Behältermittel (10) benutzt wurde.

24. Vorrichtung nach irgendeinem der vorhergehenden Ansprüche, die ferner wenigstens einen Sitz (102) zur Aufnahme eines Behälters (105a, 105b) mit unterschiedlicher vertikaler Größe aufweist, wobei der genannte Sitz nach unten eine Aufnahmeebene (103) für solche Behälter (105a, 105b) definiert, und nach oben wenigstens eine Verteileröffnung (48) für die genannten Getränke.

25. Vorrichtung nach Anspruch 24, die ferner ein Verteilerventil (106) aufweist, das ein Hauptventil (106a) und wenigstens ein zusätzliches Ventil (106b) aufweist, das mit dem Hauptventil (106a) zusammenhängt, wobei das genannte Hauptventil (106a) und das genannte wenigstens eine zusätzliche Ventil (106b) um eine Achse (X) oszillieren, die im Wesentlichen parallel zu der genannten Aufnahmeebene ist.

26. Vorrichtung nach Anspruch 25, bei der das genannte Hauptventil (106) abnehmbar an einem oberen Bereich des genannten Aufnahmesitzes (102a) angelenkt ist, um die genannten Getränke zu fördern, die aus der genannten Verteileröffnung (48) in dem genannten Behälter (105a) mit geringerer vertikaler Größe fließen.

27. Vorrichtung nach irgendeinem der vorhergehenden Ansprüche, bei der ein Ausziehmittel (300) mit dem genannten Aufnahmemittel (203a) zusammenhängend ausgebildet ist zur Überführung des genannten Behältermittels (10) aus einer abgesenkten Position (A2), in der das genannte Behältermittel (10) in Kontakt mit dem genannten Aufnahmemittel (203a) ist, in eine angehobene Position (B2), in der das genannte Behältermittel (10) von dem genannten Aufnahmemittel (203a) getrennt ist.

28. Vorrichtung nach Anspruch 27, bei das genannte Behältermittel (300) ein Stoßmittel (301) aufweist, das innerhalb eines Sitzes (303) verschiebbar ist, der von einer rohrförmigen Aufnahme (302) definiert ist, die an dem genannten Aufnahmemittel (42) befestigt ist.

29. Vorrichtung nach Anspruch 28, bei der das genannte Aufnahmemittel (203a) mit einem Loch (304) versehen ist, durch das das genannte Stoßmittel (301) gelangt, um mit dem genannten Behältermittel (10) zusammenzuwirken.

30. Vorrichtung nach Anspruch 28 oder 29, bei der das genannte Stoßmittel (301) an einer Platte (307) befestigt ist, die auf einem ersten Ende (308) einer Feder (309) liegt, wobei die genannte Feder (309) mit einem zweiten Ende (310) versehen ist, das an einem Trichterfilterhaltemittel (312) liegt, das das genannte Aufnahmemittel (203a) unterstützt.

31. Vorrichtung nach Anspruch 27, bei der das genannte Stoßmittel (301) innerhalb eines weiteren Sitzes (303a) verschiebbar ist, der in einem Gehäuse (313) vorgesehen ist, das an dem genannten Aufnahmemittel (203a) befestigt ist.

32. Vorrichtung nach Anspruch 31, bei der das genannte Stoßmittel (301) an einer weiteren Platte (307a) befestigt ist, die vertikal innerhalb einer Kammer (314) bewegbar ist, die durch das genannte Gehäuse (313) in Querrichtung definiert ist und nach unten durch ein Aufnahmeelement (315) abgeschlossen ist.

33. Vorrichtung nach Anspruch 32, bei der innerhalb der genannten Kammer (314) eine weitere Feder (309a) aufgenommen ist, die ein weiteres erstes Ende aufweist, das mit der genannten weiteren Platte (307a) zusammenhängt, und mit einem weiteren zweiten Ende (310a), das auf dem genannten Aufnahmeelement (315) liegt.

34. Vorrichtung nach Anspruch 33, bei der das genannte Ausziehmittel (300) ein elastisches Drahtmittel (316) aufweist.

35. Vorrichtung nach Anspruch 34, bei das genannte Drahtmittel einen ersten Draht (316a) aufweist.

36. Vorrichtung nach Anspruch 35, bei das genannte elastische Drahtmittel ferner einen zweiten Draht (316b) aufweist.

37. Vorrichtung nach Anspruch 36, bei der der genannte erste Draht (316a) und der genannte zweite Draht (316b) so geformt sind, dass sie eine Feder bilden, die zum Zusammenwirken mit dem genannten Behältermittel (10) geeignet ist, um das genannte Behältermittel (10) in Bezug auf einen Bodenbereich (324) des genannten Aufnahmemittels (203a) anzuheben.

38. Vorrichtung nach Anspruch 37, bei der das genannte Ausziehmittel (300) ein Filteraufnahmemittel (42a) aufweist, das vertikal innerhalb eines Sitzes (319) beweglich ist, der innerhalb des Trichterfilterhaltemittels (312) definiert ist, das das genannte Filteraufnahmemittel (42) unterstützt.

39. Vorrichtung nach Anspruch 38, bei der das genannte Trichterfilterhaltemittel (312) ferner mit einem Hohlraum versehen ist, der zur Aufnahme des genannten Behältermittels (10) während des Durchlaufens von verdünnender Flüssigkeit durch das genannte Behältermittel (10) ausgebildet ist, um eine Dosierung der genannten Getränke vorzubereiten.

40. Vorrichtung nach Anspruch 39, bei der das genannte Filteraufnahmemittel (42a) eine obere Wand (320) aufweist, die mit einer Mehrzahl von Löchern versehen ist, die einen Durchlass der genannten Getränke erlauben, sowie eine Seitenwand (321) aufweist, die zum Zusammenwirken mit dem genannten Hohlraum (319) ausgebildet ist, um das genannte Filteraufnahmemittel (42a) zu führen.

41. Vorrichtung nach irgendeinem der Ansprüche 38 bis 40, bei der zwischen dem genannten Filteraufnahmemittel (42a) und dem genannten Trichterfilterhaltemittel (312) ein Federmittel (322) angeordnet ist, um das genannte Filteraufnahmemittel (42a) aus der genannten abgesenkten Position (A2) in die genannte angehobene Position (B2) zu überführen.

## Revendications

1. Dispositif pour préparer des boissons, comprenant des moyens récepteurs (203a) aptes à recevoir des moyens (10) de contenant qui contiennent une substance de base de la boisson à préparer, lesdits moyens récepteurs (203a) pouvant coulisser le long de moyens de guidage (224) entre une position de chargement, dans laquelle lesdits moyens récepteurs (203a) sont agencés extérieurement à un corps de base (204) dudit dispositif (201) pour recevoir lesdits moyens (10) de contenant, et une position de fonctionnement, dans laquelle lesdits moyens récepteurs (203a) sont agencés intérieurement audit corps de base (204) pour amener lesdits moyens (10) de contenant à une interaction avec des moyens de distribution d'un liquide, ***caractérisé en ce qu*** 'il comprend des moyens (221) de blocage par pression aptes à maintenir lesdits moyens récepteurs (203a) dans ladite position de fonctionnement.

2. Dispositif selon la revendication 1, dans lequel lesdits moyens récepteurs comprennent une première portion (H), apte à être manipulée par un utilisateur, et une deuxième portion (220), opposée à ladite première portion, apte à interagir avec lesdits moyens (221) de blocage par pression.

3. Dispositif selon la revendication 2, dans lequel ladite deuxième portion comprend des moyens (220) de couplage à crochet configurés de manière à s'engager avec lesdits moyens (221) de blocage par pression.

4. Dispositif selon l'une quelconque des revendications précédentes, et comprenant de plus des moyens de commutateur (223) agencés pour contrôler le fonctionnement de l'appareil.

5. Dispositif selon la revendication 4, dans lequel lesdits moyens récepteurs (203a) comprennent de plus une portion supplémentaire (222) agencée pour actionner lesdits moyens de commutateur (223).

6. Dispositif selon la revendication 5, en dépendance de la revendication 2, ou 3, ou selon la revendication 4, en dépendance de la revendication 2, ou 3, dans lequel ladite portion supplémentaire (222) est opposée à ladite première portion (H).

7. Dispositif selon la revendication 5 ou 6, dans lequel ladite portion supplémentaire comprend des moyens de bouton-poussoir (222).

8. Dispositif selon la revendication 7, dans lequel lesdits moyens de bouton-poussoir (222) comprennent des éléments élastiquement déformables (229) aptes à interagir avec une portion mobile (230) desdits moyens de commutateur (223).

9. Dispositif selon la revendication 8, dans lequel lesdits moyens élastiquement déformables (229) comprennent des moyens de lames flexibles.

10. Dispositif selon la revendication 8, dans lequel lesdits moyens élastiquement déformables (229) comprennent des moyens de ressort hélicoïdal.

11. Dispositif selon l'une quelconque des revendications précédentes, dans lequel lesdits moyens de guidage (224) sont associés audit corps de base (204).

12. Dispositif selon la revendication 11, dans lequel lesdits moyens de guidage (224) comprennent des moyens de dent(s) (226) s'engrenant dans des moyens de rainure(s) (227) ménagés dans lesdits moyens récepteurs (203a).

13. Dispositif selon la revendication 12, dans lequel lesdits moyens de dent(s) (226) et lesdits moyens de rainure(s) (227) ont une section rectangulaire.

14. Dispositif selon la revendication 12, dans lequel lesdits moyens de dent(s) (226) et lesdits moyens de rainure(s) (227) ont une section trapézoïdale.

15. Dispositif selon l'une quelconque des revendications 11 à 14, dans lequel lesdits moyens récepteurs (203a) comprennent de plus des moyens de douille (228) adaptés pour recevoir des moyens de vis agissant comme butée de fin de course pour lesdits moyens récepteurs (203a).

16. Dispositif selon l'une quelconque des revendications précédentes, dans lequel lesdits moyens récepteurs (203a) sont munis de moyens de coupelle (205) aptes à recevoir lesdits moyens de contenant (10).

17. Dispositif selon la revendication 16, dans lequel lesdits moyens de coupelle (205) sont aptes à être extraits desdits moyens récepteurs (203a).

18. Dispositif selon la revendication 16 ou 17, dans lequel lesdits moyens de coupelle (205) sont munis de moyens de centrage (231) aptes à être reçus en correspondance dans des moyens de fente respectifs (232) obtenus dans lesdits moyens récepteurs (203a).

19. Dispositif selon l'une quelconque des revendications 16 à 18, dans lequel lesdits moyens de coupelle comprennent une pluralité de coupelles interchangeables entre elles (205).

20. Dispositif selon la revendication 19, dans lequel lesdites coupelles (205) ont des dimensions externes égales les unes aux autres et chacune desdites coupelles (205) est munie intérieurement de moyens de porte-filtre (233) aptes à recevoir des moyens de contenant (10) d'une taille préétablie.

21. Dispositif selon l'une quelconque des revendications 16 à 20, dans lequel lesdits moyens de coupelle (205) sont munis d'une portion inférieure (234) comprenant une ouverture distributrice (235) pour lesdites boissons.

22. Dispositif selon la revendication 21, dans lequel un bec distributeur est associé à ladite portion inférieure (234).

23. Dispositif selon l'une quelconque des revendications précédentes, et comprenant de plus des moyens de bras expulseur (14) prévu pour expulser lesdits moyens de contenant (10) desdits moyens récepteurs (203a) après que lesdits moyens de contenant (10) aient été utilisés.

24. Dispositif selon l'une quelconque des revendications précédentes, et comprenant de plus au moins un logement (102) pour recevoir un récipient (105a, 105b) d'une taille verticale variable, ledit logement définissant sur le bas un plan de support (103) pour ces récipients (105a, 105b) et sur le haut au moins une ouverture distributrice (48) pour lesdites boissons.

25. Dispositif selon la revendication 24, et comprenant de plus un bec distributeur (106) comprenant un bec principal (106a) et au moins un bec supplémentaire (106b) associé audit bec principal (106a), ledit bec principal (106a) et ledit au moins un bec supplémentaire (106b) étant rotatifs autour d'un axe (X) substantiellement parallèle audit plan de support.

26. Dispositif selon la revendication 25, dans lequel ledit bec principal (106a) est articulé de manière amovible sur une zone supérieure dudit logement (102) de manière à acheminer lesdites boissons s'écoulant de ladite ouverture distributrice (48) jusqu'à l'intérieur dudit récipient (105a) de plus petite taille verticale.

27. Dispositif selon l'une quelconque des revendications précédentes, dans lequel, auxdits moyens récepteurs (203a) sont associés des moyens extracteurs (300) agencés pour transférer lesdits moyens de contenant (10) d'une position abaissée (A2) dans laquelle lesdits moyens de contenant (10) sont en contact avec lesdits moyens récepteurs (203a) jusqu'à une position relevée (B2) dans laquelle lesdits moyens de contenant (10) sont séparés desdits moyens récepteurs (203a).

28. Dispositif selon la revendication 27, dans lequel lesdits moyens extracteurs (300) comprennent des moyens pousseurs (301) coulissant à l'intérieur d'un siège (303) délimité par un support tubulaire (302) fixé auxdits moyens récepteurs (42).

29. Dispositif selon la revendication 28, dans lequel lesdits moyens récepteurs (203a) sont munis d'un trou (304) à travers lequel passent lesdits moyens pousseurs (301) pour interagir avec lesdits moyens de contenant (10).

30. Dispositif selon la revendication 28 ou 29, dans lequel lesdits moyens pousseurs (301) sont fixés à une plaque (307) reposant sur une première extrémité (308) d'un ressort (309), ledit ressort (309) possédant une deuxième extrémité (310) reposant sur des moyens (312) de porte-filtre en entonnoir supportant lesdits moyens récepteurs (203a).

31. Dispositif selon la revendication 27, dans lequel lesdits moyens pousseurs (301) peuvent coulisser à l'intérieur d'un siège supplémentaire (303a) obtenu à l'intérieur d'un boîtier (313) fixé auxdits moyens récepteurs (203a).

32. Dispositif selon la revendication 31, dans lequel lesdits moyens pousseurs (301) sont fixés à une plaque supplémentaire (307a) se déplaçant verticalement à l'intérieur d'une chambre (314) délimitée latéralement par ledit boîtier (313) et fermée sur le bas par un élément de support (315).

33. Dispositif selon la revendication 32, dans lequel à l'intérieur de ladite chambre (314) est contenu un ressort supplémentaire (309a) ayant une autre première extrémité associée à ladite plaque supplémentaire (307a) et une autre deuxième extrémité (310a) reposant sur ledit élément de support (315).

34. Dispositif selon la revendication 33, dans lequel lesdits moyens extracteurs (300) comprennent des moyens de fil élastique (316).

35. Dispositif selon la revendication 34, dans lequel lesdits moyens de fil élastique comprennent un premier fil (316a).

36. Dispositif selon la revendication 35, dans lequel lesdits moyens de fil élastique comprennent un deuxième fil (316b).

37. Dispositif selon la revendication 36, dans lequel ledit premier fil (316a) et ledit deuxième fil (316b) sont façonnés de manière à constituer un ressort apte à interagir avec ledit moyen de contenant (10) de manière à soulever ledit moyen de contenant (10) par rapport à une zone inférieure (324) desdits moyens récepteurs (203a).

38. Dispositif selon la revendication 37, dans lequel lesdits moyens extracteurs (300) comprennent des moyens de support filtrant (42a) mobiles verticalement à l'intérieur d'un creux (319) défini à l'intérieur des moyens (312) porte-filtre en entonnoir supportant lesdits moyens (42a) de support filtrant.

39. Dispositif selon la revendication 38, dans lequel lesdits moyens (312) porte-filtre en entonnoir présentent additionnellement un creux ménagé pour recevoir lesdits moyens de contenant (10) pendant le passage d'un liquide dilueur à travers lesdits moyens de contenant (10) de manière à préparer une dose desdites boissons.

40. Dispositif selon la revendication 39, dans lequel lesdits moyens (42a) de support filtrant comprennent une paroi supérieure (320) munie d'une pluralité de trous ménagés pour permettre le passage desdites boissons et une paroi latérale (321) ménagée pour interagir avec ledit creux (319) de manière à guider lesdits moyens de support filtrant (42a).

41. Dispositif selon l'une quelconque des revendications 38 à 40, dans lequel, entre lesdits moyens de support filtrant (42a) et lesdits moyens (312) porte-filtre en entonnoir, des moyens de ressort (322) sont interposés, ménagés pour transférer lesdits moyens de support filtrant (42a) de ladite position abaissée (A2) à ladite position relevée (B2).
